(19) Europäisches Patentamt
European Patent Office
Office européen des brevets

(11) **EP 4 005 387 A2**

(12) **EUROPEAN PATENT APPLICATION**
published in accordance with Art. 153(4) EPC

(43) Date of publication:
**01.06.2022 Bulletin 2022/22**

(21) Application number: **20845905.7**

(22) Date of filing: **30.07.2020**

(51) International Patent Classification (IPC):
**A01P 3/00** [(2006.01)]      **A01P 21/00** [(2006.01)]
**A01N 63/20** [(2020.01)]      **A01N 25/00** [(2006.01)]
**C05F 11/08** [(2006.01)]

(52) Cooperative Patent Classification (CPC):
**A01N 63/20; A01N 25/00; A01P 3/00; A01P 21/00;
C05F 11/08**

(86) International application number:
**PCT/CU2020/050004**

(87) International publication number:
**WO 2021/018321 (04.02.2021 Gazette 2021/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2019 CU 20190071**

(71) Applicant: **Centro De Ingeniería Genética Y
Biotecnología
11600 La Habana (CU)**

(72) Inventors:
• **ALVAREZ LUGO, Irene, María
Camagüey 70100 (CU)**

• **SANCHEZ ORTIZ, Ileana
Camagüey 70100 (CU)**
• **WONG PADILLA, Idania
Camagüey 70100 (CU)**
• **SOMONTES SANCHEZ, Danalay
Camagüey 70100 (CU)**
• **MORAN VALDIVIA, Rolando
Camagüey 70100 (CU)**
• **GALDÓS BETARTEZ, Liszoe
Camagüey 70100 (CU)**
• **DOMINGUEZ RABILERO, Laritza, Caridad
Camagüey 70100 (CU)**
• **NORDELO VALDIVIA, Aylin
Camagüey 70100 (CU)**

(74) Representative: **V.O.
P.O. Box 87930
2508 DH Den Haag (NL)**

(54) **BIOPESTICIDE AND BIOFERTILISER COMPOSITION**

(57)     Biopesticide and biofertilizer composition comprising *Pseudoxanthomonas indica,* or metabolites from said bacterium, and excipients or diluents. Use of *Pseudoxanthomonas indica,* or metabolites from said bacterium to develop a biopesticide or biofertilizer composition. Method for the control of phytopathogens and zoonematodes comprising the administration of an effective amount of *Pseudoxanthomonas indica,* or its metabolites, to the plant or animal in need thereof. Method for the stimulation of plant growth comprising the administration of an effective amount of *Pseudoxanthomonas indica,* or metabolites from that bacterium, to the soil or substrate, plant or seed.

EP 4 005 387 A2

## Description

### Technical field

The present invention is related to the field of agriculture, and it is based on the administration of *Pseudoxanthomonas indica* in agriculture as a beneficial microorganism in this area. As shown in the invention, the bacteria of this microbial species have nematicidal and fungicide activity, which induces a defensive response, and acts as a plant growth promoter without affecting the environment.

### Prior art

Plants are associated to microorganisms that have biofertilizing and biocontrolling activities. The biofertilizer effect of these microorganisms favor proper plant status through an increase in nutrient availability, nitrogen fixation, and symbiosis. Biocontrol is manifested as an rise in plant growth by controlling pathogenic microorganisms. This effect is developed through mechanisms like antibiotics, siderophores, bacterium and fungus antagonistic substances, extracellular enzymes, and increased resistance to biotic and abiotic stress. Generally, this type of bacterial genus include *Pseudomonas*, *Serratia*, *Bacillus*, *Enterobacter,* and *Xanthomonas;* the fungal species include *Trichoderma* (Mabood, Zhou, and Smith 2014, Can. J. Plant Sci. 94: 1051-1063).

Particularly, one of the most commonly observed phytopathogens are nematodes, becoming one of the most important pests in agriculture, in tropical, subtropical, and temperate areas. Among nematode species, *Meloidogyne* ssp., causes crop losses in many tropical areas estimated between 11 and 25%. The annual related-losses are estimated in approximately $ 87 billion worldwide. Chemical nematicides have been the most frequently used method to control nematodes due to their speed and efficacy. However, fumigants, like methyl bromide have been banned in many countries due to their high toxicity in mammals, their capacity to reduce the ozone layer, and residual effects. Considering such premises, current practices foster the utilization of beneficial microorganisms as antagonists of phytonematodes to produce biologicals (Jones et al. 2013, Mol Plant Pathol 14(9), 946-961).

Some of the natural enemies of nematodes are fungi *Paecilomyces lilacinus*, *Verticillium chlamydosporium, Arthrobotrys oligospora, and Trichoderma harzianum.* There are also bacteria, like *Pasteuria penetrans*, *Agrobacterium radiobacter*, *Bacillus sphaericus, Bacillus subtilis, Bacillus thuringiensis* (Dong and Zhang 2006, Plant and Soil 288(1):31-45), and *Tsukamurella paurometabola strain* C924 (Patent EP 0774906 B1). More recently, strains of genuses *Chromobacterium, Burkholderia,* and *Flavobacterium* were patented to modulate nematode infestation.

However, bioproducts still fail to provide total effectiveness, creating a need to produce beneficial microorganisms, which do not favor the occurrence of plant pathogen resistance, and cause minimum environmental effects.

### Description of the invention

This invention addresses the above-mentioned issue, by providing a biopesticide and biofertilizer composition that comprises *Pseudoxanthomonas indica,* or metabolites from that bacterial species, and excipients or diluents. The current invention demonstrated for the first time that this species can be used as a broad-spectrum nematicide and fungicide capable of controlling populations of nematodes and phytopathogenic fungi found in major crops. The experiments related to the invention evidenced that the biopesticide composition comprising *Pseudoxanthomonas indica* reduces *Meloidogyne* egg hatching *in vitro*, compared to the hatching levels of eggs untreated with that bacterium, with an ensuing increase in nematode larvae mortality. The administration of this bacterium to the soil reduces the infestation index by *Meloidogyne* spp. in tomato, and reduces the number of root galls, with a high technical efficiency (TE).

In the context of this invention, a biopesticide is understood as a product used to control agricultural pests through specific biological effects. This feature distinguishes biological pesticides from much broader-action chemical pesticides. It is known in this technical field that biopesticides comprise a biological control agent; that is, an organism, its genes or metabolites, for pest control (Lacey and Sporleder, 2013, Chapter 16 Biopesticides, Insect Pests of Potato, 463-497pp). In the biopesticide composition of the invention, the effect of the biological control is assumed by a bacterium or the compounds it produces.

In the context of this invention, a biofertilizer is a product containing a beneficial organism that favors plant growth and development, with no adverse effects on the ecosystem, as an alternative to chemical fertilizers. The knowledgeable in this technical field sustain that biofertilizers facilitate nutrient availability and absorption, as well as plant hormone production. Additionally, they bestow tolerance to plant stress, and raise pathogen resistance, leading to crop improvements (Bhardwaj et al., 2014 Microbial Cell Factories 13:66).

According to experimental evidence shown, the invention provides a defensive response inducer, and a plant growth promoter to treated plants. It involves microorganism *Pseudoxanthomonas indica,* a Gram negative motile bacterium, which is positive to catalase and oxidase, that forms yellow colonies after 24 of growing at 28 °C, in Tryptone Soy Agar medium. In the invention, the bacterium was obtained from the rhizosphere of a healthy tomato plant in a crop protection facility infested with *Meloidogyne* spp., and it was identified as *Pseudoxanthomonas indica* by conventional biochemical and molecular biology techniques. This bacterial species is not new; it has been isolated from the soil in other world regions. The representative strain of this species, named P15, was isolated from the soil in an outdoor hexachloroethane waste dump, in India, and was reported in 2011 (Kumari et al. 2011, Int J Syst Evol Microbiol 61: 2107-2111). This species is commercially available in known collections of microorganisms.

In one embodiment of the invention, the biopesticide or biofertilizer composition, comprises live or inactivated bacterium *Pseudoxanthomonas indica*. The current invention demonstrates that both the supernatant from culturing and the live bacterium, and its volatile or soluble compounds (metabolites) have nematicidal or fungicidal activity.

Within the context of the invention, a metabolite is understood as that substance or compound produced by *Pseudoxanthomonas indica*, which is capable of controlling pests in plants and zoonematodes, and/or has a plant growth stimulating activity. In an implementation of the invention, the metabolites originally produced by *Pseudoxanthomonas indica* are obtained by natural, recombinant or chemical synthesis methods. In a particular implementation, metabolites are volatile or soluble compounds.

The metabolites released by *Pseudoxanthomonas indica* into the culture medium, and the volatile compounds it produces have *in vitro* activity on phytopathogenic various fungi: *Rhizoctonia solani, Sarocladium oryzae, Stemphylium solani, Phytophthora nicotianae, Bipolaris oryzae, and Fusarium oxysporum*. Additionally, they possess a plant growth stimulating activity, and augment plant length and weight, the length of the main root, and the number of lateral roots, and radicular hairs.

In an embodiment of this invention, the composition additionally comprises stabilizing compounds, enhancers, elicitors of nematicidal activity or seed coatings. In an implementation of the invention, the bacterial concentration is between $1 \times 10^8$ and $1 \times 10^{10}$ colony forming units (CFU) per ml of the composition. The biopesticide composition is useful for direct or indirect control of phytopathogens and zoonematodes.

In another aspect, the invention comprises the utilization of *Pseudoxanthomonas indica*, or metabolites of this bacterium to produce a biopesticide or biofertilizer composition. In an embodiment of this invention, for such use, the bacterial concentration is between $1 \times 10^8$ and $1 \times 10^{10}$ cfu per ml of the composition. In an implementation of this invention, the biofertilizer composition is formulated as pre-packed soil, a powder, liquid, suspension, granulate, nebulizer, or encapsulate.

Additionally, this invention reveals a method for the control of phyto and zoo nematodes that comprises the administration of an effective amount of *Pseudoxanthomonas indica*, or its metabolites, to the plant or the animal that needs it. In an embodiment of this invention, in such method, the bacterium is applied as a suspension or a concentrate of the live or inactivated strain. In a particular embodiment of the invention, in such method, the bacterium is formulated as pre-packed soil, a powder, liquid, suspension, granulate, nebulizer or encapsulate. In an implementation, in the method of invention, the strain is useful to reduce the infestation degree produced by phytopathogenic nematodes or fungi, to plants.

Another object of this invention is a method for stimulation of plant growth that comprises the administration of an effective amount of *Pseudoxanthomonas indica*, or its metabolites, to the soil, substrate, plant, or seed. In such method, optionally, the bacterium is formulated as pre-packed soil, a powder, liquid, suspension, granulate, nebulizer or encapsulate.

## Brief description of the drawings

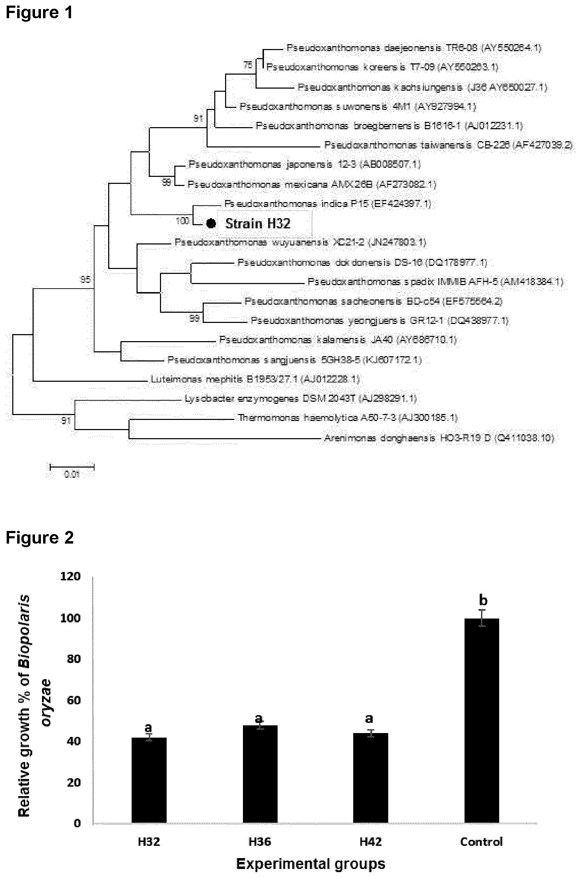

Figure 1. Phylogenetic tree of strain H32, according to the Neighbour-joining method, in the sequence of genes codifying for 16s ribosomal ribonucleic acid (rRNA), which shows the relation of strain H32 with representative members of family *Pseudoxanthomonas*. The microorganisms outside the group were *Luteimonas mephitis* B1953/27, *Arenimonas donghaensis* HO3-R19, *Lysobacter enzymogenes* DSM 2043T, and *Thermomonas haemolytica* A50-7-3. Bootstrap values greater than 70% are observed in branch nodes (expressed in % of 1 000 replicas). The bar represents two substitutions every 100 nucleotides.

Figure 2. Effect of volatile organic compounds (VOC) on fungus *Bipolaris oryzae* growth. H32, H36, and H42: Bacterial strains studied. Control: Untreated group. Unequal letters mean statistically significant differences, according to the Duncan test, p<0.05.

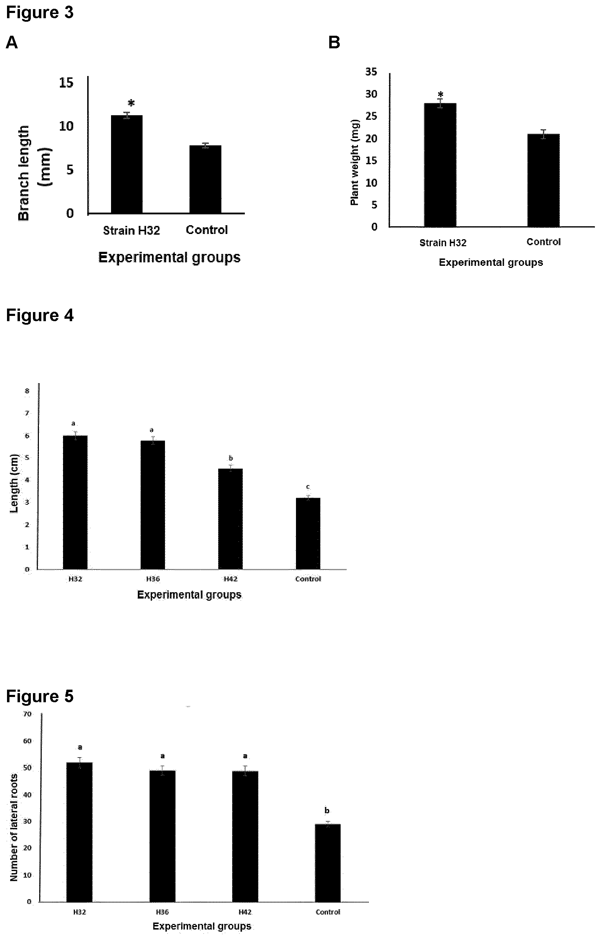

Figure 3. Branch length (**A**), and weight (**B**) of *Arabidopsis thaliana* plants, after 14 days of exposition to VOCs of *Pseudoxanthomonas indica* strain H32 (H32) or Tryptone Soy Broth culture medium (Control). The asterisk indicates statistically significant differences, according to the Student test *p*<0.05.

Figure 4. The length of the main root of *Arabidopsis thaliana* plants, following eight days of co-culture with *Pseudoxanthomonas indica*, strains H32, H36, and H42, or $MgSO_4$ (10 mmol/L), as negative control (Control). Unequal letters mean statistically significant differences, according to the Duncan test, $p<0.05$.

**Figure 5.** Number of lateral roots of *Arabidopsis thaliana* exposed to *Pseudoxanthomonas indica,* strains H32, H36, and H42, or to MgSO$_4$ (10 mmol/L), as negative control (Control). Unequal letters mean statistically significant differences, according to the Duncan test, $p<0.05$.

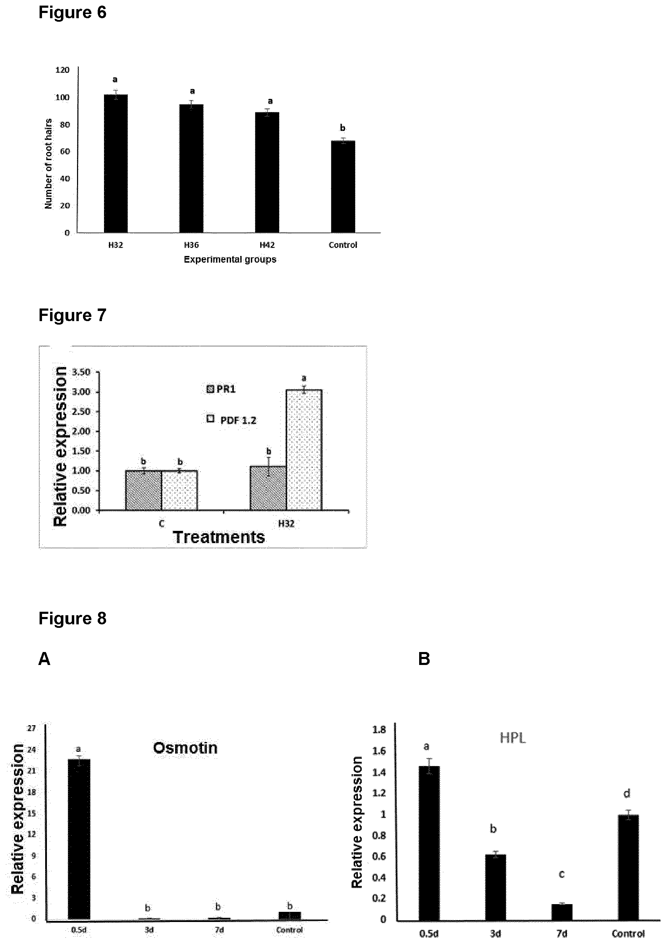

**Figure 6.** Number of radicular hairs along 1 cm of the main root of *Arabidopsis thaliana* plants exposed to *Pseudoxanthomonas indica*, strains H32, H36, and H42, or to MgSO$_4$ (10 mmol/L), as negative control (Control). Unequal letters mean statistically significant differences, according to the Duncan test, $p<0.05$.

**Figure 7.** Effect of *Pseudoxanthomonas indica,* strain H32, applied to roots, on the expression of defense genes PR1 and PDF1.2, on *Arabidopsis thaliana* leaves. Experimental groups: Control plants treated with water (C), and plants treated with bacterial strain H32 (H32). Unequal letters mean statistically significant differences, according to the Duncan test, $p<0.05$.

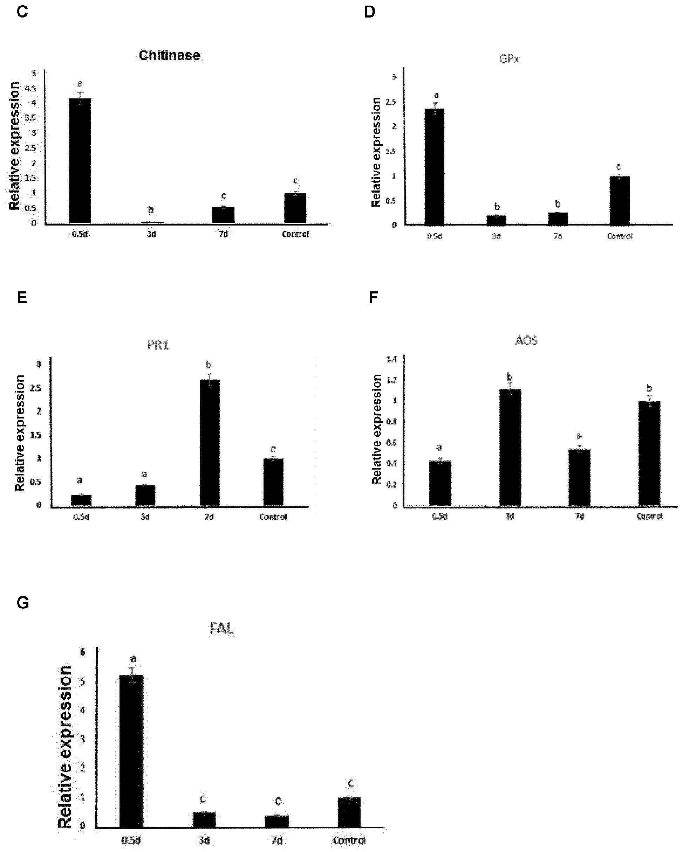

**Figure 8.** Effect of *Pseudoxanthomonas indica,* strain H32, applied to roots, on the expression of defense genes: osmotin (panel A), hydroxyperoxide lyase (HPL) (panel B), chitinase (panel C), peroxidase glutathione (GPx) (panel D), PR-1 (panel E), allene oxide synthase (AOS) (panel F), and phenylamine-ammonium lyase (FAL) (panel G). Unequal letters mean statistically significant differences, according to the Duncan test, $p<0.05$. Gene expression was measured at systemic level, in tomato leaves.

## Examples

### Example 1. Isolation and preservation of bacterial strains with nematicidal properties.

To isolate bacterial strains with nematicidal properties, samples were collected from rhizospheric soil of the least affected tomato plants in a crop protection facility with high *Meloidogyne* spp. infestation, in the province of Ciego de Ávila. First, selective pre-enrichment was performed. To fulfill that, a gram of rhizospheric soil was incubated for 48 hours, at 30 °C, in M9 minimal medium containing 100 eggs of *Meloidogyne* by mL of the culture, as the only source of carbon and energy. Based on this preparation, serial dilutions were inoculated in Petri dishes, using M9 minimal medium, with 0.05% chitin, for strain selection. The colonies with a halo having morphologically different characteristics were selected, and denominated with an H, followed by the consecutive number of isolation. Then, a second colony selection was made, by determining desulphurase and gelatinase activity. The desulphurase activity is observed due to blackening of filter paper embedded in led acetate, placed on the colonies in the Petri dish with Soy Tryptone Agar, as a result of the sulphydric acid produced by the colonies. Gelatinase activity is evaluated through the observation of hydrolysis halos after 24 hours of growing in nutrient agar with 0.5% gelatin, and the addition of Frazier's reagent.

Strains H32, H36, and H42 showed a 3-5 mm opaque, light yellow, circular shape with convex elevation after 24 hours of incubation at 30 °C, in Soy Tryptone Agar medium. The borders of the colonies were solid, with a smooth shiny surface, and a creamy consistence. To preserve the isolates, a colony was grown for 12 hours in Soy Tryptone Broth, then glycerol was added as cryopreservative (20% final concentration (v/v), and the samples were frozen at -70 °C).

### Example 2. Taxonomic identification of the isolated bacteria.

For identification, Gram staining, the oxidase and catalase test, and the Hugh Leifson test, were performed, according to the manual of Bergey's Systematic Bacteriology (Vos et al. 2009, Springer Dordrecht Heidelberg London New York, 2nd Edition, Vol 3, 1450 pp ISBN: 978-0-387-95041-). Strains H32, H36, and H42 were determined to be Gram negative, motile, aerobial, bacilli, with oxidative metabolism. The conventional tests made using the API 20NE kit (Biomeriux), produced a profile that did not match any other in the kit's identification catalog. The results of biochemical tests are shown in Table 1.

**Table 1.** Results of the biochemical tests performed using API 20NE.

| Test | Result |
| --- | --- |
| Nitrate reduction to Nitrite | + |
| Indol production | - |
| Production of glucose acid | - |
| Dihydrolase arginine | - |
| Urease | - |
| Esculin Hydrolysis | + |
| Gelatin hydrolysis | + |
| β-galactosidase | + |

(continued)

| Test | Result |
|---|---|
| Assimilation of: | |
| D-Glucose | + |
| L-Arabinose | - |
| D-Mannose | + |
| D-Mannitol | - |
| N-acetyl glucosamine | + |
| D-Maltose | + |
| Gentibiose | - |
| Caproic acid | - |
| Adipate | - |
| Malate | + |
| Citrate | - |
| Phenyl acetate acid | - |
| Oxidase | + |

The strains referred to in Example 1 were also characterized using molecular biology, by sequencing a gene fragment that codifies for 16S rRNA. The oligonucleotides used as primers for Polymerase Chain Reaction were 63 F and 1387R (Marchesi et al. 1998 Applied and Environmental Microbiology 64(2):795-9). The sequences were compared with the ones available at the GenBank database, from the National Center for Biotechnological Information of the United States, using MEGA 7.0 (*Molecular Evolutionary Genetics Analysis Software Version 7.0, Center for Evolutionary Functional Genomics, The Biodesign Institute, Arizona State University*). The phylogenetic tree obtained by Neighbour-joining, which is shown in figure 1, confirmed that strains H32, H36, and H42 made a coherent group with members of the genus *Pseudoxanthomonas,* phylum *Bacteroidetes,* and an intragenus branch with *Pseudoxanthomonas indica. Luteimonas mephitis* B1953/27, *Arenimonas donghaensis* HO3-R19, *Lysobacter enzymogenes* DSM 2043T, and *Thermomonas haemolytica* A50-7-3 A, were used as microorganisms outside the group. The bootstrap values over 70% appeared on branch nodes. Figure 1 only shows information in relation to strain H32. The phylogenetic tree achieved through the maximum probability method had a similar typology to the one produced by Neighbour-joining.

The distance matrix analysis allowed for determination of greater nearness of the 16S rRNA sequence of the strains used in the study, with *Pseudoxanthomonas indica* P15, EF424397.1. According to the results from the phylogenetic analysis, it was inferred that the strains studied belong to species *Pseudoxanthomonas indica,* and the results of the biochemical tests correspond to the main characteristics described for this bacterial species.

**Example 3. *In vitro* nematicidal activity of bacteria corresponding to the selected strains.**

*In vitro* assays were performed with eggs and juveniles of phytonematode *Meloidogyne* spp. The nematicidal activity was determined in live cells of *Pseudoxanthomonas indica.* Accordingly, egg masses were collected from roots of tomato plants affected by this pest; then the masses were disaggregated with 0.5% sodium hypochlorite, and three replicas (100 eggs) were prepared for each of the samples to be assayed. To obtain the larvae, the eggs were incubated between 28-30 °C in sterile deionized water, for 6 days. The control samples were prepared in the same way, with 100 eggs and 100 larvae of the nematode, in 1 ml of sterile water with peptone (1% (w/v)). The activity criterion against *Meloidogyne* spp. eggs was determined as the inhibition percent of egg hatching. The activity criterion against larvae or juveniles of the nematode was determined by calculating the reduction percent of their survival.

The samples of whole live cells of *Pseudoxanthomonas indica* were prepared from a fresh culture of each strain, whose bacterial concentration was determined as cfu per ml. By duplicate, 1 ml of the culture was taken, and the cells were separated by centrifugation and washed with peptone (1%) in water. Later, three serial dilutions were made (1:100) in the same solution used in the assays. Tables 2 and 3 show the effects of two of the dilutions of *Pseudoxanthomonas indica* on the eggs and larvae of nematodes.

**Table 2.** Hatching inhibition percent of nematode *Meloidogyne* spp. eggs, at two concentrations of viable cells of *Pseudoxanthomonas indica*.

| Strain | Hatching inhibition | |
|---|---|---|
| | $5×10^6$ cfu/ml | $5×10^4$ cfu/ml |
| H32 | 83% | 89% |
| H36 | 75% | 80% |
| H42 | 74% | 85% |
| Control | 20% | 22% |

**Table 3.** Survival reduction percent on *Meloidogyne* spp. nematode larvae, at two concentrations of live cells of *Pseudoxanthomonas indica*.

| Strain | Survival reduction of larvae | |
|---|---|---|
| | $5×10^6$ cfu/ml | $5×10^4$ cfu/ml |
| H32 | 50% | 55% |
| H36 | 43% | 45% |
| H42 | 38% | 40% |
| Control | 15% | 20% |

Hence, it was evidenced that *Pseudoxanthomonas indica* inhibits *Meloidogyne* spp. egg hatching. It also reduces the survival of larvae from this nematode.

**Example 4. Profiles of carbohydrate utilization and enzymatic activity of *Pseudoxanthomonas indica*.**

To determine the carbohydrates used by *Pseudoxanthomonas indica* strain H32, as the only source of carbon and energy, the CH50 kit from Biomeriux was utilized. The bacteria from *Pseudoxanthomonas indica* strain H32 oxidized the following carbohydrates: D-Glucose, D-Fructose, D-Mannose, N-acetyl-glucosamine, D-Maltose, D-Lactose, and D-Sucrose, as reported for the strain type of this species (*Pseudoxanthomonas indica* P15).

To determine the enzymatic profile of this *Pseudoxanthomonas indica* strain, chitinase production was detected by growing in M9 minimal medium, with 0.5% colloidal chitin. In turn, the production of proteases was detected by sowing in dishes containing Nutrient Agar and 0.5% gelatin, and the subsequent development was done using Frazier's reagent. Additionally, APIZYM™ was used to detect phosphatases, estereases, lipases, glucoronidases, galactosidases, fucosidase, mannosidase, arylases, N-acetyl-β-glucosaminidase, and Naftol- AS-BI-phosphohydrolase.

The results of these determinations are shown in Table 4, which demonstrate that the bacteria of *Pseudoxanthomonas indica* strain H32 have an oxidative metabolism, and are capable of degrading a large number of organic compounds, and other complex chemical compounds.

**Table 4.** Enzymes released by *Pseudoxanthomonas indica* strain H32

| Enzyme | Result |
|---|---|
| Chitinases | + |
| Proteases | + |
| Esterease (C4) | + |
| Lipase esterease (C8) | + |
| Lipase (C14) | - |
| Trypsin | + |
| α chymotrypsin | + |
| β-glucosidase | - |
| N-acetyl-β-glucosaminidase | + |
| Alkaline phosphatase | + |

(continued)

| Enzyme | Result |
|---|---|
| Arylamidase leucine | + |
| Arylamidase valine | + |
| Arylamidase cysteine | + |
| Acid phosphatase | + |
| Naphtol-AS-BI-phosphohydrolase | + |

+: presence        -: absence

### Example 5. Effect of *Pseudoxanthomonas indica* on infestation of *Meloidogyne* spp. in *Solanum lycopersicum*.

An assay was performed to evaluate the *in vivo* nematicidal activity of *Pseudoxanthomonas indica* in tomato plants (*Solanum lycopersicum*). They were transplanted into pots containing 1 kg of substrate, and were infested with 500 eggs of *Meloidogyne* spp. The bacterium was grown in Soy Tryptone Broth for 24 h, and serial dilutions were made with deionized water for administration to plants in concentrations of $4\times10^4$-$2\times10^4$ cfu/g of substrate. The scheme used consisted of two administrations. One administration was made 3 days after infestation of the substrate with the nematode. The tomato seedlings were transplanted 7 days later. The second administration was made 14 days after transplantation. Bacterial strain C-924, which has known properties as nematicide, was used as the positive control (European Patent EP 0774906 B1). In this experiment, deionized water was used as control (negative control).

At 35 days of transplantation, the tomato plants were collected, and the infestation degree was determined in the roots, using the 0-10 degree Bridge and Page scale. The TE of each strain H32 concentration was determined according to these results (Wong et al. (2017) Biotecnología Aplicada, 34:4301-43) The bacterium was effective against nematodes of genus *Meloidogyne* in all the treatments evaluated, as shown in Table 5.

Table 5. *Solanum lycopersicum* root infestation degree, and treatment TE based on *Pseudoxanthomonas indica*.

| Treatment | cfu/g | Gradation | TE* (%) |
|---|---|---|---|
| T 10 | $4\times10^7$ | 1.38 | 75.32 |
| T 11 | $4\times10^6$ | 1.89 | 66.10 |
| T 12 | $4\times10^5$ | 1.29 | 76.92 |
| T 13 | $4\times10^4$ | 2.38 | 57.37 |
| T 14 | $2\times10^4$ | 2.43 | 56.41 |
| Strain C-924 | $2\times10^8$ | 3.00 | 46.15 |
| CONTROL | - | 5.60 | 0.0 |

*TE: Technical Efficiency

Accordingly, bacteria from species *Pseudoxanthomonas indica* can reduce the index of *Meloidogyne* spp. with over 50% TE.

### Example 6. Antifungal activity of metabolites released into the *Pseudoxanthomonas indica* culture medium.

In order to determine antifungal activity of the metabolites released into the culture medium of *Pseudoxanthomonas indica* strain H32, first, a lid of approximately 7 mm, with culture medium containing the fungus in the middle of a Petri dish with (Papa Dextrose Agar). On both sides, 10 µL of a bacterial suspension of strain H32 was added to Soy Tryptone Broth, forming a line. Only the same culture medium was added to the control treatment. In each case, two replicas were made. After 5 days of incubation at 28 °C, the diameter of the fungus colonies was measured, and the relative growth percent was determined in relation to the control, as:

Growth inhibition % _ (diameter of the control colony - diameter of the colony with the treatment / (diameter of the control colony -7))*100.

The results shown in Table 6 indicate that *Pseudoxanthomonas indica* stopped the development of a group of phytopathogenic fungi that affect crops with high economic relevance.

**Table 6.** Growth inhibition of phytopathogenic fungi by metabolites released by *Pseudoxanthomonas indica.*

| Fungus | Growth inhibition % |
|---|---|
| *Rhizoctonia solani* | 77.9 |
| *Sarocladium oryzae* | 47.8 |
| *Stemphylium solani* | 72.0 |
| *Phytophthora nicotianae* | 92.6 |
| *Bipolaris oryzae* | 80.9 |
| *Fusarium oxysporum cubense* | 43.9 |

**Example 7. Antifungal activity of volatile organic compounds produced by *Pseudoxanthomonas indica*.**

A system consisting of two Petri dish bottoms was assembled. In the lower part, it contained PDA medium; then, an approximately 7 mm lid with fungus *Bipolaris oryzae,* was placed on top. It contained Soy Tryptone Agar, to which 100 μL of a 12 h culture with bacterial strains H32, H36, and H42 in Soy Tryptone Broth, were added. In the control treatment, only 100 μL of Soy Tryptone Broth, were added. In each case, two replicas were made. The system was sealed with Parafilm™, and was incubated at 28 °C. At 5 days, the diameter of the fungus colonies was measured. Growth inhibition in relation to the control treatment was determined as:

$$\text{Growth inhibition \%} = ((\text{diameter of the control colony - diameter of the treated colony} / (\text{diameter of the control colony -7}))*100.$$

The three strains studied inhibited *Bipolaris oryzae* growth in more than 50%, without having physical contact with the pathogen, as shown in Figure 2. Hence, the volatile compounds of *Pseudoxanthomonas indica* have antifungal activity.

**Example 8. Production of plant growth promoter volatile compounds by bacterium *Pseudoxanthomonas indica*.**

In order to demonstrate plant growth promoter activity, seeds of *Arabidopsis thaliana* (approximately 100 seeds per treatment) were sterilized with a mix containing 1 mL sodium hypochlorite (2% (v/v), and 3 μL of triton X100 (1% (v/v)). Then they were shaken for 8 minutes at 37 °C. Later, they were washed approximately 5 times with sterile distilled water, and stored at 4 °C for 4 days. They were placed in 150 mm Petri dishes containing MS medium. Smaller Petri dishes (50 mm diameter) containing Soy Tryptone Agar were placed in the center of the larger petri dishes. Two days after plant germination, the Soy Tryptone Agar medium containing 10 μL of a culture of the microorganism studied, which had been previously grown in Soy Tryptone Broth for 12 h at 37 °C, was inoculated. The system was sealed with Parafilm™, and was incubated at 20 ± 2 °C, with a 16 h light/8 h dark photoperiod. Samples were collected at 14 days to evaluate the length and weight of branches, and the number of leaves. Following 14 days of incubation in Petri dishes containing *Pseudoxanthomonas indica,* the *Arabidopsis thaliana* plants showed better growth than the control without the bacterium (Figure 3). This evidenced growth stimulation of the plants by the volatile compounds produced by the said bacterium.

**Example 9. Effect of soluble compounds released by *Pseudoxanthomonas indica* on root morphology.**

The seeds of *Arabidopsis thaliana* var Col 0 were exposed to the soluble compounds released into the culture medium by *Pseudoxanthomonas indica.* Previously, the seeds had been sterilized by dipping, for 8 minutes at 37 °C, with shaking, in a solution containing 1 mL of sodium hypochlorite (2% (v/v), and 3 μL Triton X100 (1% (v/v). The seeds were washed five times with sterile distilled water, and were stored at 4 °C for 4 days.

A number of 10 seeds were placed equidistant in a straight line and, on the upper bottom of a 100 mm Petri dish, containing MS medium. The plates were placed vertically in the light room, at 22 ± 2 °C, and 16 h light/8 h dark photoperiod. Following 4 days of plant germination, 240 μL of a bacterial suspension of strains H32, H36, and H42 were added to the culture medium, at a distance of 2-3 cm from the lower end of the roots. These suspensions were prepared from a culture in Soy Tryptone Broth grown at 28 °C, for 18 h, which was centrifuged, and resuspended in $MgSO_4$ 10 mmol/L. The system was sealed with Parafilm™, and incubated in the light room under the same conditions. The $MgSO_4$ 10 mmol/L was used as negative control. A total of 3 replicas were made in each case.

At 8 days of co-culture, the length of the primary root, the number of lateral roots, and the number of root hairs in 1 cm along the primary root, were measured from the lower end and upward. In this evaluation, a stereoscope and an inverted microscope were used. The roots of the co-cultured plants with the bacterial strains showed a different morphology, compared to the control. This evidenced possible alterations in root architecture, induced by this bacterium. The primary root of the plants treated with the bacterium was longer (statistically significant, *p<0.05*) than in the control treatments (Figure 4.).

The number of lateral roots, and the number of root hairs were significantly higher than in the control treatment (*p<0.05*), as shown in Figure 5 and Figure 6. Hence, the administration of *Pseudoxanthomonas indica* increases the surface area of roots, and therefore, the possibility of nutrient absorption.

**Example 10. Evaluation of the capacity of *Pseudoxanthomonas indica* to induce the expression of immune response markers in *Arabidopsis thaliana,* Pseudoxanthomonas indica and tomato.**

Assay in *Arabidopsis thaliana*

The *A. thaliana* seeds were incubated in water at 4 °C, for four days; then they were sown in substrate made of sand: peat (1:1). After six weeks of germination, they were transplanted into small pots containing the same substrate composition. A week later, the pots were divided in two groups, at random. The first group was treated with bacteria from strain H32, at a rate of 1 mL per plant, with a suspension containing $10^9$ cfu/mL, in saline solution. The second group (control) was only treated with 1 mL of saline solution. Four administrations were made at seven-day intervals. Two hours following the last administration, samples of leaves and roots from the plants in each treatment, were collected, and frozen immediately in liquid nitrogen.

The expression of genes PR1 (salicylic-acid-mediated immune response marker), and PDF1.2 (jasmonic-acid-mediated-immune response marker), was determined by real-time quantitative polymerase chain reaction (RT-qPCR). The ubiquitin gene was used as internal control. As shown in Figure 7, increased PDF1.2 gene expression was observed in the leaves of plants treated with bacteria from strain H32, compared to the experimental control. The level of expression of the PR1 gene was not different from the one observed in the control group. Therefore, species *Pseudoxanthomonas indica* bacteria induced PDF1.2 expression in a systemic way, which is reported as a defense mechanism linked to resistance against nematode infestation.

Tomato trial

The aim of the study was to evaluate the capacity of *Pseudoxanthomonas indica* to modulate immune response in tomato (*Solanum lycopersicum*), at the systemic level. Bacteria from strain H32 were applied as a cellular suspension of $10^9$ cfu/mL, in the plant rhizosphere. Sample collections were made at 12 h, 3 days, and 7 days following the administration of the bacterium. At every harvest time, samples were collected randomly from six plants from every treatment. The plants were distributed in two replicas to homogenize variations. Upon sample collection, they were immediately preserved in liquid nitrogen, until processing. The RT-qPCR method was used to determine the relative expression of defense genes phenylalanine-ammonium lyase (PAL), glutathione peroxidase (GPx), osmotin, chitinase, hydroperoxyde lyase (HPL), allene oxide synthase (AOS), and PR1, in the leaves. Actine was used as internal control of the assay.

Figure 8 shows that *Pseudoxanthomonas indica* can induce, in the early stages of plant interaction, the expression of genes osmotin, HPL, chitinase, Gpx, and PAL. Moreover, suppression of gene PR1 was observed at 12 hours and 3 days of applying the bacterium to the plants, along with overexpression of the very same gene at seven days, in relation to the plants in the control group. The expression of gene AOS, during the evaluated times, did not increase in relation to the controls. The results achieved evidence that *Pseudoxanthomonas indica* can modulate the immune system of plants to favor resistance to the attack of pathogens.

**Example 11. Obtaining a *Pseudoxanthomonas indica* formulation, and demonstration of its stability.**

A formulation consisting of a *Pseudoxanthomonas indica* strain H32 concentrate, as active ingredient, yeast extract, as the source of organic matter rich in aminoacids, vitamins, and growth factors, a tensoactive substance, and water, was achieved. The final composition of the formulation was, Yeast extract (70.4%); Sucrose (1.4%); Glanapon DG-1578™ (3.2%), and dry biomass (20%) of microorganism *Pseudoxanthomonas indica.* In the composition, the bacterium is at a $10^9$-$10^{10}$ cfu/mL concentration. The residual humidity of the composition was 5.0%. A real time stability study was done to 3 batches of the formulation, to determine viable cell count, and nematicidal activity against phytonematode *Meloidogyne incognita,* in pots, at 6 and 12 months of storage of the formulation.

Table 7 shows the number of viable cells, and TE of the formulation for the said times. It shows that the formulation or composition for biological control of phytonematodes is stable for at least 12 months.

**Table 7.** Stability study of the formulation

| Property | 0 months | 6 months | 12 months |
|---|---|---|---|
| Viable count | $(5.0 \pm 0.3) \times 10^{10}$ | $(2.2 \pm 0.6) \times 10^{10}$ | $(9.2 \pm 0.7) \times 10^{9}$ |
| Biological activity (TE* (%)) | 75.32 | 73.7 | 68.0 |
| TE*: Technical Efficiency | | | |

**Example 12. *In vivo* evaluation of the nematicidal effect of *Pseudoxanthomonas indica* on three species of phytonematodes.**

The procedure was made in crop protection facilities to evaluate the *in vivo* nematicidal effect of the formulation described in Example 11, on species *Meloidogyne incognita*, *Meloidogyne arenaria*, and *Radopholus similis*. The trials using species *Meloidogyne incognita* and *Meloidogyne arenaria* species were performed in tomato plants (*Solanum lycopersycum*), and the trial with *Radopolus similis* was in plantain (*Musa* spp.). The plantain and tomato plantlets were transplanted into pots containing 2 kg of substrate composed of sand: peat (1:1). Before transplantation, 3 000 *Meloidogyne incognita* eggs, 3 000 *Meloidogyne arenaria* eggs or 500 specimens of *Radopholus similis,* were inoculated. In the *Meloidogyne incognita* and *Meloidogyne arenaria* assays, the scheme used consisted of two administrations: the first one at 3 days of substrate infestation; and the second, 14 days after transplantation. At 35 days of transplantation, the plants were collected, and the degree of infestation was determined. The plantain infested with *Radopholus similis* received 3 administrations: at 15, 49, and 63 days. After 80 days of transplantation, the quantity of nematodes per 100 g of root, was evaluated. Based on these results, the TE of *Pseudoxanthomonas indica* formulation was determined in the two crops. As shown in Table 8, the bacterium was effective in the three nematode species evaluated.

**Table 8.** Technical efficiency of the formulation of *Pseudoxanthomonas indica* against several species of phytonematodes.

| Phytonematodes | TE* (%) |
|---|---|
| *Meloidogyne incognita* | 78.45 |
| *Meloidogyne arenaria* | 75.89 |
| *Radopholus similis* | 79.65 |
| TE*: Technical Efficiency | |

**Claims**

1. Biopesticide and biofertilizer composition comprising *Pseudoxanthomonas indica,* or metabolites from such bacterial species, and excipients or diluents.

2. The composition of claim 1 comprising the suspension or concentrate of live or inactivated *Pseudoxanthomonas indica.*

3. The composition of claim 1 wherein the metabolites are obtained by natural, recombinant, or chemical synthesis methods.

4. The composition of claim 1 wherein the metabolites are volatile or soluble compounds.

5. The composition of claim 1 which additionally comprises stabilizing compounds, enhancers, elicitors of nematicidal activity or seed coatings.

6. The composition of claim 1 wherein the *Pseudoxanthomonas indica* concentration is between $1 \times 10^{8}$ and $1 \times 10^{10}$ cfu/mL.

7. The composition of claim 1 wherein the biopesticide is used for direct or indirect control of phytopathogens and zoonematodes.

8. Use of *Pseudoxanthomonas indica,* or metabolites from such bacterial species, for the manufacture of a biopesticide or biofertilizer composition.

9. The use in claim 8 wherein the *Pseudoxanthomonas indica* concentration is between $1 \times 10^8$ and $1 \times 10^{10}$ cfu/mL.

10. The use of claim 8 wherein the biopesticide is employed for the direct or indirect control of phytopathogens and zoonematodes.

11. The use of claim 8 wherein the biofertilizer composition is formulated as pre-packed soil, a powder, liquid, suspension, granulate, nebulizer, or encapsulated product.

12. Method for the control of phytopathogens and zoonematodes comprising the administration of an effective amount of *Pseudoxanthomonas indica,* or metabolites from such bacterial species, to the plant or animal in need thereof.

13. The method of claim 12 wherein *Pseudoxanthomonas indica* is administered as a suspension or a concentrate of said bacterium live or inactivated.

14. The use of claim 12 wherein *Pseudoxanthomonas indica* is formulated as pre-packed soil, a powder, liquid, suspension, granulate, nebulizer, or encapsulated product.

15. The method of claim 12 wherein *Pseudoxanthomonas indica* is used to reduce the degree of infestation produced by phytopathogenic nematodes or fungi in plants.

16. A method for the stimulation of plant growth comprising the administration of an effective amount of *Pseudoxanthomonas indica,* or metabolites from such bacterial species, to the soil, substrate, plant or seed.

17. The method of claim 16 wherein *Pseudoxanthomonas indica* is formulated as pre-packed soil, a powder, liquid, suspension, granulate, nebulizer, or encapsulated product.

## Figure 1

## Figure 2

## Figure 3

**A**

**B**

## Figure 4

## Figure 5

**Figure 6**

**Figure 7**

**Figure 8**

**A**

**B**

**C**

Chitinase

**D**

GPx

**E**

PR1

**F**

AOS

**G**

FAL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0774906 B1

**Non-patent literature cited in the description**

- **MABOOD ; ZHOU ; SMITH.** *Can. J. Plant Sci.,* 2014, vol. 94, 1051-1063
- **JONES et al.** *Mol Plant Pathol,* 2013, vol. 14 (9), 946-961
- **DONG ; ZHANG.** *Plant and Soil,* 2006, vol. 288 (1), 31-45
- **LACEY ; SPORLEDER.** *Biopesticides, Insect Pests of Potato,* 2013, 463-497
- **BHARDWAJ et al.** *Microbial Cell Factories,* 2014, vol. 13, 66
- **KUMARI et al.** *Int J Syst Evol Microbiol,* 2011, vol. 61, 2107-2111
- **VOS et al.** Bergey's Systematic Bacteriology. Springer Dordrecht Heidelberg, 2009, vol. 3, 1450
- **MARCHESI et al.** *Applied and Environmental Microbiology,* 1998, vol. 64 (2), 795-9
- **WONG et al.** *Biotecnología Aplicada,* 2017, vol. 34, 4301-43